# EUROPÄISCHE PATENTSCHRIFT

(11) **EP 1 246 947 B1**
(45) Veröffentlichungstag und Bekanntmachung des Hinweises auf die Patenterteilung: **01.10.2003**
(21) Anmeldenummer: 00988762.1
(22) Anmeldetag: 28.11.2000
(51) Int. Cl.: C21B 13/14

(54) **VERFAHREN ZUR ERZEUGUNG VON ROHEISEN**
METHOD FOR PRODUCING PIG IRON
PROCEDE DE PRODUCTION DE FONTE BRUTE

(30) Priorität: 23.12.1999 DE 19963609
(43) Veröffentlichungstag der Anmeldung: 09.10.2002
(73) Patentinhaber: Deutsche Voest-Alpine Industrieanlagenbau GmbH, 40219 Düsseldorf (DE); Voest-Alpine Industrieanlagenbau GmbH & Co., 4031 Linz (AT)
(72) Erfinder: VULETIC, Bogdan, 40457 Düsseldorf (DE)
(74) Vertreter: Pfenning, Meinig & Partner GbR
(86) Internationale Anmeldenummer: EP0011870
(87) Internationale Veröffentlichungsnummer: WO01048251

(56) Entgegenhaltungen:
- EP-A- 0 320 999
- EP-A- 0 921 200
- WO-A-99/28512
- DE-A- 2 819 465
- US-A- 4 045 214
- US-A- 4 895 593
- US-A- 4 946 498
- US-A- 5 435 832
- US-A- 5 542 963

## Beschreibung

Die Erfindung betrifft ein Verfahren nach dem Oberbegriff des Anspruchs 1.

Bei einer Anlage zur Erzeugung von Roheisen aus Eisenerz, in welcher ein Reduktionsschacht und ein Einschmelzvergaser miteinander gekoppelt sind, ist es bei der Beschickung des Einschmelzvergasers mit den reduzierten Eisenträgern und kalzinierten Zuschlägen nur über den Reduktionsschacht sowie mit Kohlenstoffträgern über die Kohlelinie in nur wenigen Fällen und in kürzeren Zeitperioden möglich, beide Aggregate ohne negative gegenseitige Beeinflussung zu betreiben. Die beiden Aggregate sind betriebsmäßig so miteinander verbunden, daß normalerweise der Betrieb der gesamten Anlage abwechselnd eine Zeitlang zu Gunsten des Reduktionsschachtes und dann eine Zeitlang zu Gunsten des Einschmelzvergasers verschoben wird. Eine Zeitlang wird so im Einschmelzvergaser ausreichend Reduktionsgas produziert, wodurch der Reduktionsschacht mit einer hohen spezifischen Reduktionsgasmenge betrieben wird und die Eisenträger und Zuschläge, die aus dem Reduktionsschacht in den Einschmelzvergaser chargiert werden, einen hohen Metallisierungs- und Kalzinierungsgrad haben. Infolgedessen wird der Energiebedarf im Einschmelzvergaser geringer, Roheisen-, Schlacke- und/oder Domtemperaturen steigen an, die Sauerstoffmenge wird zurück genommen und die im Einschmelzvergaser produzierte Reduktionsgasmenge wird geringer. Eine unzureichende Reduktionsgasmenge für den Reduktionsschacht wiederum hat einen niedrigeren Metallisierungs- und Kalzinierungsgrad der in den Einschmelzvergaser eingebrachten Charge zur Folge, so dass der Energiebedarf im Einschmelzvergaser wieder ansteigt, das Temperaturniveau im Einschmelzvergaser abfällt, die spezifische Sauerstoffmenge zum Vergaser angehoben wird und der neue Zyklus mit einem höheren Energieeintrag wieder neu beginnt. Nur durch Auswahl von aufeinander abgestimmten Rohstoffen und durch vorzeitige Einleitung von Gegenmaßnahmen ist es möglich, die Ausbildung solcher Zyklen mit allen negativen Folgen wie zu kaltes oder zu heißes Roheisen, Schwankungen des Silizium-, Kohlenstoff- und Schwefelgehaltes des Roheisens und dergleichen zu vermeiden. Um kontinuierlich brauchbares Roheisen zu erzeugen, wird die Anlage mit einem weit höherem spezifischen Energieverbrauch und mit weit stärkerer Schwankung der Roheisenqualität betrieben, als es der Fall wäre, wenn die beiden Aggregate betriebsmäßig voneinander entkoppelt wären.

Die US-A-4 045 214 beschreibt ein Verfahren zum Herstellen von Stahl aus feinkörnigem Eisenerz, bei dem das Eisenerz zwei hintereinander geschaltete Reduktionsaggregate durchläuft und als Eisenschwamm mit einem Metallisierungsgrad zwischen 40 und 95 % einem Schmelzaggregat zugeführt wird. Dies geschieht in der Weise, dass der Eisenschwamm gegebenenfalls gemischt mit feinkörnigem Eisenerz, über im Boden des Schmelzaggregats angeordnete Manteldüsen direkt in eine Metallschmelze befördert wird. Sauerstoff, Kalk und Feinkohle werden ebenfalls der Schmelze unmittelbar zugegeben.

Die Aufgabe der vorliegenden Erfindung besteht darin, den Reduktionsschacht und den Einschmelzvergaser betriebsmäßig voneinander zu entkoppeln und ohne negative gegenseitige Beeinflussung zu betreiben.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Durch die kombinierte und aufeinander abgestimmte Beschickung des Einschmelzvergasers mit einem gut durchreduzierten, d.h. einen hohen Metallisierungsgrad aufweisenden Eisenschwamm aus dem Reduktionsschacht und mit Eisenoxid vorzugsweise über die Vergasungsmittellinie werden dem Einschmelzvergaser insgesamt Eisenträger mit einer kontrollierten Metallisierung, die relativ unabhängig von der Metallisierung des Eisenschwamms allein ist, zugeführt, so daß der Betrieb des Einschmelzvergasers optimiert wird. Durch direkte Einbringung des Eisenoxids über den Kopf des Einschmelzvergasers wird diesem zusätzlicher Sauerstoff zugeführt, der im Dom des Einschmelzvergasers unter Ausnutzung der überschüssigen Wärmemenge mit feinen Vergasungsmittelpartikeln reagiert. Um einen Kohlenstoffmangel im Dom des Einschmelzvergasers zu vermeiden und der CO-Oxidation zu CO₂ durch überschüssigen Sauerstoff entgegen zu wirken, wird dem Einschmelzvergaser über die Vergasungsmittellinie neben Eisenoxid auch Vergasungsmittel-Unterkorn zugeführt. Durch einen energiemäßig ausbalancierten Einschmelzvergaser und eine ausreichende Reduktionsgasmenge zum Reduktionsschacht werden so beide Aggregate ohne gegenseitige Beeinflussung betrieben.

Eine hohe und gleichmäßige Metallisierung des Einschwamms aus dem Reduktionsschacht gibt genug Spielraum dafür, daß diese durch Zugabe des Eisenoxids dem Energieüberschuß im oberen Bereich des Einschmelzvergasers und der Qualität der Rohstoffe, besonders des Vergasungsmittels, angepaßt wird.

Der Metallisierungsgrad des Eisenschwamms aus dem Reduktionsschacht soll über 90%, bevorzugt über 92%, aufrecht erhalten werden und durch Zugabe des Eisenoxids auf etwa 88% oder auf einen noch niedrigeren Wert herabgesetzt werden, falls eine Überschußgasproduktion wirtschaftlich ist (z.B. für die Eisenschwamm- oder Stromerzeugung). In diesem Fall ist ein Eintrag des Vergasungsmittel-Unterkorns und das Einblasen von erhöhten Sauerstoffmengen in den Dom des Einschmelzvergasers technisch und wirtschaftlich sehr sinnvoll.

Um bei der Absiebung der Eisenträger das gesamte anfallende Eisenoxid und einen Teil des Vergasungsmittel-Unterkorns einsetzen zu können, werden der Metallisierungsgrad des Eisenschwammes aus dem Reduktionsschacht und die Sauerstoffmenge zum Dom des Einschmelzvergasers entsprechend angepaßt.

Der erhöhte Energiebedarf für die Reduktion des Eisenoxid- und die Vergasung des Vergasungsmittel-Unterkorns im oberen Bereich des Koksbettes und im Dombereich des Einschmelzvergasers wird durch Einblasen von erhöhten Sauerstoffmengen in den Dom des Einschmelzvergasers gedeckt.

Dem Einschmelzvergaser wird kohlenstoffhaltiges Unterkorn über die Vergasungsmittellinie zugeführt, um den erhöhten Bedarf an Kohlenstoffträgern im Dombereich des Einschmelzvergasers zu decken und die Verbrennung von CO zu CO₂ zu unterbinden.

Durch den zusätzlichen Eintrag von Sauerstoff in Form von Eisenoxid, flüchtigen Bestandteilen des Vergasungsmittel-Unterkorns und gasförmigem Sauerstoff in den oberen Bereich des Einschmelzvergasers wird eine ausreichende Reduktionsgasmenge im Einschmelzvergaser erzeugt, womit der Reduktionsschacht unabhängig vom Anteil an flüchtigen Bestandteilen des Vergasungsmittels mit einer hohen und gleichmäßigen spezifischen Reduktionsgasmenge betrieben werden kann.

Durch eine derartige Entkopplung des Betriebes des Reduktionsschachtes vom Betrieb des Einschmelzvergasers wird erreicht, daß diese beiden Hauptaggregate ohne gegenseitige Beeinflussung betrieben werden.

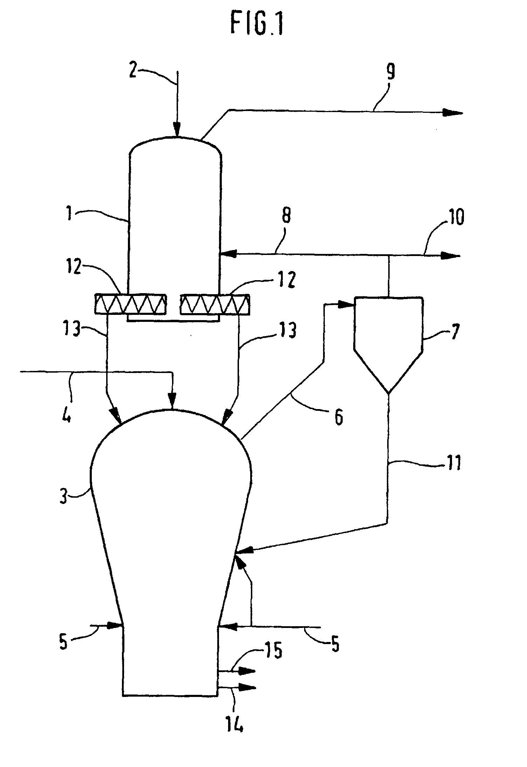

Die Erfindung wird im Folgenden anhand eines in der Figur wiedergegebenen Ausführungsbeispiels näher erläutert. Diese zeigt in schematischer Darstellung eine im Wesentlichen aus einem Reduktionsschacht und einem Einschmelzvergaser bestehende Anlage zur Erzeugung von Roheisen aus Eisenerz.

In den Reduktionsschacht 1 wird von oben über eine Chargiervorrichtung 2 stückiges Eisenerz, gegebenenfalls mit ungebrannten Zuschlagsstoffen, chargiert. Der Reduktionsschacht 1 steht mit dem Einschmelzvergaser 3 in Verbindung, in welchem aus einem kohlenstoffhaltigen Vergasungsmittel, das über eine Förderleitung 4 eingebracht wird, und einem sauerstoffhaltigen Gas, das über Gasleitungen 5 zugeführt wird, ein Reduktionsgas erzeugt wird. Dieses wird über eine Leitung 6 aus dem Kopf des Einschmelzvergasers 3 herausgeführt, in einem Heißgaszyklon 7 von festen Bestandteilen, insbesondere Staub- und feinkörniger Kohle befreit und gelangt dann über eine Leitung 8 in den Reduktionsschacht 1. In diesem durchströmt das Reduktionsgas die Säule aus Eisenerz und Zuschlagsstoffen im Gegenstrom zu diesen und reduziert hierbei das Eisenerz zu Eisenschwamm. Das zumindest teilweise verbrauchte Reduktionsgas wird am oberen Ende des Reduktionsschachtes 1 über eine Topgasleitung 9 abgezogen.

Nicht benötigtes Reduktionsgas wird über eine Leitung 10 einer anderen Verwendung zugeführt.

Der im Heißgaszyklon 7 abgeschiedene Kohlenstaub wird über eine Leitung 11 mittels eines Transportgases, vorzugsweise Stickstoff, zum Einschmelzvergaser 3 zurückgeführt und bei Eintritt in diesen durch in der Wand des Einschmelzvergasers 3 angeordnete Staubbrenner, denen auch sauerstoffhaltiges Gas zugeleitet wird, vergast.

Über Austragschnecken 12 und Fallrohre 13 wird der im Reduktionsschacht 1 erzeugte Eisenschwamm in den Kopf des Einschmelzvergasers 3 eingebracht.

Am Boden des Einschmelzvergasers 3 sammeln sich flüssiges Roheisen und über diesem flüssige Schlacke, die jeweils über einen Abstich 14 bzw. 15 diskontinuierlich abgezogen werden.

Vor dem Einbringen des Vergasungsmittels über die Förderleitung 4 in den Dom des Einschmelzvergasers 3 wird diesem Eisenoxid zugemischt, das vorzugsweise aus dem abgesiebten Unterkorn des Eisenerzes vor dessen Chargierung in den Reduktionsschachtofen besteht. Dieses könnte ansonsten für den Reduktionsprozess nicht verwendet werden. Bei einem direkten Einsatz des Unterkorns im Einschmelzvergaser 3 sind jedoch keine negativen Auswirkungen auf den Prozess zu befürchten, wenn dieses nur in der für den entkoppelten Betrieb von Reduktionsschacht 1 und Einschmelzvergaser 3 erforderlichen Menge zugegeben wird.

Das über die Förderleitung 4 zugeführte Vergasungsmittel enthält kohlenstoffhaltiges Unterkorn, um den erhöhten Bedarf an Kohlenstoffträgern für die Erzeugung des Reduktionsgases im Dombereich des Einschmelzvergasers 3 zu decken und eine Verbrennung von CO zu CO₂ zu verhindern.

Der Eintrag von Sauerstoff in Form von Eisenoxid, flüchtigen Bestandteilen des Vergasungsmittels (Kohle)-Unterkorns und gegebenenfalls zusätzlichem gasförmigem Sauerstoff in den oberen Bereich des Einschmelzvergasers 3 erfolgt unter der Maßgabe, daß eine ausreichende Menge Reduktionsgas mit konstanter Zusammensetzung, insbesondere niedrigem CO₂- und H₂O-Gehalt und maximalem CO- und H₂-Gehalt, sowie konstanter Temperatur gebildet wird, um den Reduktionsschacht 1 unabhängig vom Anteil der flüchtigen Bestandteile des Vergasungsmittels und damit entkoppelt vom Betrieb des Einschmelzvergasers 3 betreiben zu können.

Das Reduktionsgas wird in einer solchen Menge in den Reduktionsschacht 1 geführt, daß eine hohe Metallisierung des Eisenschwamms erreicht wird. Diese sollte beim Verlassen des Reduktionsschachtes 1 über 90%, möglichst über 92% liegen. Die Einstellung der effektiven Metallisierung, vorzugsweise 88% oder darunter, erfolgt dann durch entsprechend dosierte Zugabe des Eisenoxids über die Förderleitung 4. Es ist auch möglich, das Eisenoxid mit dem aus dem Reduktionsschacht 1 herausgeführten Eisenschwamm zu mischen, bevor diese Mischung in den Kopf des Einschmelzvergasers 3 eingebracht wird. Das Niveau der effektiven Metallisierung wird durch die Zugabe des Eisenoxid gegenüber dem Metallisierungsgrad des im Reduktionsschacht 1 erzeugten Eisenschwamms insoweit erniedrigt, als es möglich sein muß, aktuelle Energiedefizite im Einschmelzvergaser 3 durch eine Rücknahme des Eisenoxidzusatzes abzufangen. Sofern das Energiedefizit im Einschmelzvergaser 3 auf einem Rückgang des Metallisierungsgrades des aus dem Reduktionsschacht 1 stammenden Eisenschwamms beruht, kann alternativ oder zusätzlich zur Rücknahme des Eisenoxidzusatzes die spezifische Vergasungsmittel- bzw. Energieträgerrate erhöht werden. Hierdurch wird dem Reduktionsschacht zusätzliches Reduktionsgas zur Verfügung gestellt, so daß die Metallisierung wieder erhöht wird.

## Patentansprüche

1. Verfahren zur Erzeugung von Roheisen, bei dem in einem Reduktionsschacht (1) Eisenerz in Eisenschwamm reduziert und dieser anschließen in den Kopf eines Einschmelzvergasers (3) eingebracht und in diesem mit Hilfe eines ebenfalls in den Kopf des Einschmelzvergasers (3) eingebrachten Vergasungsmittels sowie eines sauerstoffhaltigen Gases aufgeschmolzen und zu flüssigem Roheisen eingeschmolzen wird, wobei gleichzeitig ein Reduktionsgas erzeugt wird, das aus dem Kopf des Einschmelzvergasers (3) abgeführt und dem Reduktionsschacht (1) zur Reduktion des Eisenoxids zugeführt wird,
**dadurch gekennzeichnet, daß** der in den Einschmelzvergaser (3) eingebrachte Eisenschwamm einen hohen Metallisierungsgrad von über 90% aufweist und daß zusätzlich Eisenoxid in den Einschmelzvergaser (3) zur Herabsetzung des Metallisierungsgrades eingeführt wird.

2. Verfahren nach Anspruch 1, **dadurch gekennzeichnet, daß** stückiges Eisenoxid in Form von Eisenerz verwendet wird.

3. Verfahren nach Anspruch 1 oder 2, **dadurch gekennzeichnet, daß** das Eisenoxid über eine Förderleitung (4) für das Einbringen des Vergasungsmittels eingeführt wird.

4. Verfahren nach einem der Ansprüche 1 bis 3, **dadurch gekennzeichnet, daß** der Metallisierungsgrad des Eisenschwamms aus dem Reduktionsschacht (1) über 92% beträgt.

5. Verfahren nach einem der Ansprüche 1 bis 4, **dadurch gekennzeichnet, daß** durch die Zugabe des Eisenoxids der Metallisierungsgrad der in den Einschmelzvergaser (3) eingeführten Eisenträger auf etwa 88% oder einen noch niedrigeren Wert herabgesetzt wird.

6. Verfahren nach einem der Ansprüche 1 bis 5, **dadurch gekennzeichnet, daß** zumindest ein Teil des sauerstoffhaltigen Gases in den Dombereich des Einschmelzvergasers (3) eingeblasen wird.

7. Verfahren nach einem der Ansprüche 1 bis 6, **dadurch gekennzeichnet, daß** dem Einschmelzvergaser (3) im Dombereich kohlenstoffhaltiges Unterkorn über eine Förderleitung (4) für das Einbringen des Vergasungsmittels zugeführt wird.

8. Verfahren nach einem der Ansprüche 1 bis 7, **dadurch gekennzeichnet, daß** eine Mischung aus Eisenoxid und Eisenschwamm in den Einschmelzvergaser (3) chargiert wird.

9. Verfahren nach einem der Ansprüche 2 bis 8, **dadurch gekennzeichnet, daß** Eisenoxid-Unterkorn als stückiger Eisenoxidträger in den Einschmelzvergaser chargiert wird.

## Claims

1. Method for producing pig iron in which iron ore is in a reduction shaft **(1)** reduced to sponge iron which is then introduced into the head of a melt-down gasifier (3) where it is melted with the aid of a gasifying means which is also introduced into the head of the melt-down gasifier (3) and an oxygen containing gas and melted down to liquid pig iron, and at the same time a reduction gas is produced which is discharged from the head of the melt-down gasifier (3) and fed to the reduction shaft **(1)** for the purpose of reducing the iron oxide, **characterised in that** the sponge iron introduced into the melt-down gasifier (3) has a high metallisation degree of over 90%. and additionally iron oxide is introduced into the melt-down gasifier (3) for the purpose of reducing the metallisation degree.

2. Method according to Claim 1, **characterised in that** iron oxide pieces are used in the form of iron ore.

3. Method according to Claim 1 or 2, **characterised in that** the iron oxide is introduced via a conveying pipe (4) for introduction of the gasifying means.

4. Method according to one of Claims 1 to 3, **characterised in that** the metallisation degree of the sponge iron from the reduction shaft (1) is above 92%.

5. Method according to one of Claims 1 to 4, **characterised in that** by way of adding iron oxide the metallisation degree of iron carriers introduced into the melt-down gasifier (3) is reduced to approximately 88% or less.

6. Method according to one of Claims 1 to 5, **characterised in that** at least a portion of the oxygen containing gas is blown into the dome area of the melt-down gasifier (3).

7. Method according to one of Claims 1 to 6, **characterised in that** the melt-down gasifier (3) is in the dome area fed carbon containing sub-grain via a conveying pipe (4) for delivery of the gasifying means.

8. Method according to one of Claims 1 to 7, **characterised in that** a mixture of iron oxide and sponge iron is charged into melt-down gasifier (3).

9. Method according to one of Claims 2 to 8, **characterised in that** the iron oxide sub-grain is charged into the melt-down gasifier as iron oxide carrying pieces.

## Revendications

1. Procédé de production de fonte brute, selon lequel on réduit du minerai de fer en éponge de fer dans une cuve de réduction (1) et on introduit ensuite cette éponge de fer dans la tête d'un gazéificateur à fusion (3) et on le fait fondre dans ce dernier à l'aide d'un agent de gazéification également introduit dans la tête du gazéificateur à fusion (3) et ainsi que d'un gaz contenant de l'oxygène et on l'amène à l'état de fonte brute liquide, selon lequel simultanément est produit un gaz réducteur, qui est évacué de la tête du gazéificateur à fusion (3) et est envoyé à la cuve de réduction (1) pour réduire l'oxyde de fer,
**caractérisé en ce que** l'éponge de fer introduite dans le gazéificateur à fusion (3) possède un degré élevé de métallisation supérieur à 90 % et qu'en outre on introduit de l'oxyde de fer dans le gazéificateur à fusion (3) pour réduire le degré de métallisation.

2. Procédé selon la revendication 1, **caractérisé en ce qu'**on utilise l'oxyde de fer en morceaux sous la forme de minerai de fer.

3. Procédé selon la revendication 1 ou 2, **caractérisé en ce qu'**on introduit l'oxyde de fer au moyen d'une canalisation d'entraînement (4) pour l'introduction de l'agent de gazéification.

4. Procédé selon l'une des revendications 1 à 3, **caractérisé en ce que** le degré de métallisation de l'éponge de fer à la sortie de la cuve de réduction (1) est supérieur à 92 %.

5. Procédé selon l'une des revendications 1 à 4, **caractérisé, en ce que** par addition de l'oxyde de fer, on réduit le degré de métallisation des porteurs de fer introduits dans le gazéificateur à fusion (3) à environ 90 % ou à une valeur encore plus faible.

6. Procédé selon l'une des revendications 1 à 5, **caractérisé en ce qu'**au moins une partie du gaz contenant de l'oxygène est injecté par soufflage dans la zone du dôme du gazéificateur à fusion (3).

7. Procédé selon l'une des revendications 1 à 6, **caractérisé en ce qu'**on envoie au gazéificateur à fusion (3) dans la zone du dôme, des fines contenant du carbone par l'intermédiaire d'une canalisation de transport (4) pour l'introduction de l'agent de gazéification.

8. Procédé selon l'une des revendications 1 à 7, **caractérisé en ce qu'**on charge un mélange formé d'oxyde de fer et d'éponge de fer dans le gazéificateur à fusion (3).

9. Procédé selon l'une des revendications 2 à 8, **caractérisé en ce qu'**on charge des fines d'oxyde de fer en tant que porteurs d'oxyde de fer en morceaux, dans le gazéificateur à fusion.
